# EUROPEAN PATENT SPECIFICATION

(11) **EP 1 989 134 B1**
(45) Date of publication and mention of the grant of the patent: **08.01.2014**
(21) Application number: 07700164.2
(22) Date of filing: 19.01.2007
(51) Int. Cl.: B65G 47/68, B65B 35/44, B65B 5/06

(54) **A TRANSFER STATION FOR PACKING OF PRODUCTS COMBINED TO PORTIONS**
ÜBERGABEEINRICHTUNG ZUM ABPACKEN VON IN PORTIONEN ZUSAMMENGESTELLTEN PRODUKTEN
POSTE DE TRANSFERT POUR L'EMBALLAGE DE PRODUITS COMBINES EN PORTIONS

(30) Priority: 19.01.2006 DK 200600085; 19.07.2006 DE 202006011278 U
(43) Date of publication of application: 12.11.2008
(73) Proprietor: Newtec A/S, 5230 Odense M (DK)
(72) Inventor: PETERSEN, Gunnar, C., 5800 Nyborg (DK); RASMUSSEN, Ken, 5750 Ringe (DK)
(74) Representative: Brock-Nannestad, George
(86) International application number: PCT/DK2007/000025
(87) International publication number: WO 2007/082539

(56) References cited:
- EP-A1- 0 495 261
- CH-A- 380 010
- DE-A1- 10 346 122
- DE-U1-202006 011 343
- US-A- 3 778 959
- US-A- 4 142 636
- US-A- 4 231 463
- US-A- 4 462 516
- US-A- 4 976 343
- US-A- 6 105 338

## Description

The invention relates to a transfer station for packing of products combined to portions, comprising a conveyor belt structure with an edge defined as one end of the conveyor, said conveyor belt structure displaying oblong segments, in which the products are combined to portions, in order to pack the content of each segment into packs at said edge by means of a packing device. Such transfer stations are known for packing weighed products. The collection frequency occurs on the basis of combined weight, but a transfer station of the above kind may also be used with products that are combined for a total count, based on size or any other property.

In the retail trade use is made of packs that contain a number of units of the same type but of unequal weight, as they are composed in such a way that the combined weight of the pack exceeds the target weight as little as possible. For the preparation of a pack scales are used that are capable of choosing the necessary candidates for inclusion in the pack after weighing of each unit during its passage trough the weighing system. They appear at a number of discharges that are opened individually when the foremost unit is the next in line to be used. In most cases the discharges of known constructions of scales are disposed on a straight line, but certain constructions of scales have a circular disposition.

On a conveyor the content for a pack is carried ahead in a segment as a group of units, in order that this segment of the conveyor only needs to be emptied into the pack, which may typically be a bag or a tray or the similar. This pack may for example be sealed or closed in other ways after being filled and be conveyed further by means of other conveyors. Concurrently the next pack is filled with the next portion. A number of machine installations are known that are capable of performing these basic operations. However, they generally have the disadvantage that the weighing system with the conventional transfer to conveyors constitutes both a buffer that operates very unevenly over time and a time delay, and this reduces the capacity of such an installation with respect to similar installations that handle units of the same weight. The capacity of pack filling machines, such as bag filling machines or tray wrapping machines are in this case not the limiting factor. There is hence a need for a transfer station that is capable of utilizing a possible increase in the capacity in a weighing or other sorting system as such.

In German Gebrauchsmuster 202005017295.2 an installation is known that works with a particular gentleness, in which a combined portion of parts or units is collected on a gutter-like trough. The trough has a length equal to the total width of the weighing system, and in a part operation the whole content of a trough is discharged as a portion onto a conveyor that is moved parallel to the trough and the weighing system. At the end of the conveyor is placed a collecting station that transfers the portion to a pack. However, a new portion can only be transferred to the conveyor when the whole length of the prior portion has passed the transferring troughs.

A transfer station according to the invention solves this problem of capacity by means of a construction according to the features mentioned in the introduction that is particular in that the segments have an oblique relationship to the edge of the conveyor belt structure, and that the transfer station for use with conveyor means for transporting packs along said edge is constituted such that the content in each segment is dynamically emptied into a predetermined pack during the time in which the pack is moved by said conveyor means along said edge, synchronously with the consecutive arrival of the products to said edge. The segments obtain a particular angular relationship to the direction of movement of the conveyor belt structure. Several packs may be filled at the same time, when they are moved parallel to the end of the conveyor belt structure, synchronously with the consecutive arrival of products to said end. This means that with a given translational speed of the conveyor belt, the content of a segment may be delivered faster, because it is delivering along a moving point on a line, instead of in one location, as long as the pack follows this point synchronously. This has advantageously been combined with the normal requirement that packs are also transported to and from the packing station.

Specifically relating to automatic weighing systems, in an advantageous embodiment the transfer station consists of a conveyor belt structure that is divided into segments by means of walls, said structure being filled with the desired total weight of products during the time that is available between the passage of two subsequent walls, that the content between two walls is emptied in the time during which a pack is conveyed synchronously with the conveyor belt structure with its opening along that part of the conveyor belt structure where products are currently delivered. Hereby it is obtained that the transfer from the scales to the pack is performed faster, because the portion is distributed partially across the width of the conveyor belt instead of along its length, as in the prior art, and the receiving open packs are conveyed synchronously across the end of the conveyor belt during the complete emptying of a portion. Dependent on the weighing system used and the individual scales, advantageous embodiments may use discharge unit openings that are disposed on a straight line or a part of a circle, as the case may be.

The division of the conveyor belt structure into segments by means of walls is advantageous. In a further advantageous embodiment the walls are provided at right angles to the discharge direction of the discharge units.

An advantageous embodiment is particular in that the conveyor belt structure is provided in the form of one wide belt, on which the walls have a particular angle to the direction of movement of the belt.

A further advantageous embodiment is particular in that the conveyor belt structure is provided in the form of a number of parallel conveyor belts that are moved forward synchronously, and on which the walls have a particular angle to the direction of movement of the belts and are disposed end-to-end on neighbouring conveyor belts. This embodiment entails that even though the geometry is the same as above, the conveyor belt structure consists of several conveyor belts, each of which being easier to manipulate.

A further advantageous embodiment is particular in that the particular angle of the walls to the direction of movement of the conveyor belt structure is a right angle. This embodiment may entail that the manufacture of the conveyor belt is simpler than when the placement of the walls is oblique.

A further advantageous embodiment is particular in that the transfer station is constituted such that the total weight of products is distributed in segments on individual conveyor belts, said total weight arriving in sequence but time-shifted along the end of the conveyor belt structure. Hereby the logical space that contains the products, respectively the total weight of weighed products is combined from a number of segments, the walls of which do not define straight but rather staircase-shaped delimitations.

For collecting the products a further embodiment is particular in a transfer station is provided, in which a pack is brought forward on a chain to open at the first arriving part of a segment, whereupon it is moved linearly, open, and synchronously with the arrival of products, until the segment has been emptied, whereupon the pack is closed and carried off for further processing. Thereafter the process is repeated with respect to the next segment. The geometry and the time sequence is independent of whether a bag or e.g. a tray is used for collecting the products.

The invention will be described further with reference to the drawing, in which
Fig. 1 shows a dimetric representation of an embodiment of the invention,
Fig. 2 from above shows an embodiment of a conveyor belt structure according to the invention,
Fig. 3 from above shows a different embodiment of a conveyor belt structure according to the invention, and
Fig. 4 from above shows a further embodiment of a conveyor belt structure according to the invention.

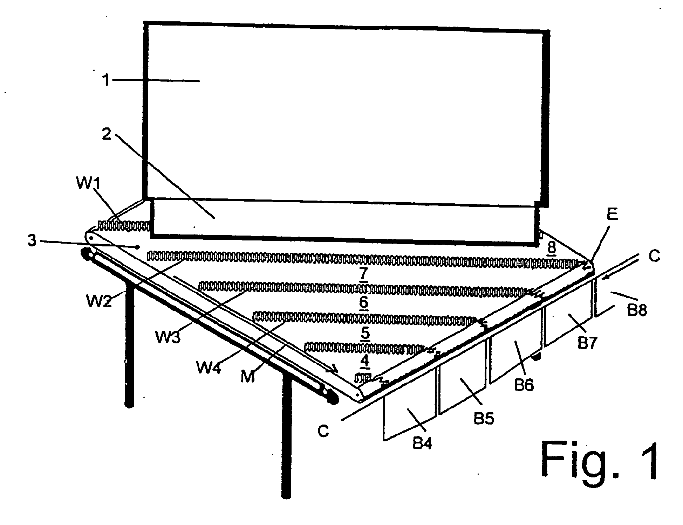

In Fig. 1 is seen a transfer arrangement or transfer station in conjunction with a weighing system I connected to a discharge device 2 that has a row of discharge units (not shown), which, under the control of a programming and the actual weight of a unit of the product discharges parts of a portion on a conveyor belt 3. The upper side of the conveyor belt moves to the right in the drawing, as shown by the arrow M. The discharge occurs exclusively to a segment 8 that is delimited by walls W1 and W2. As may be seen in Fig. 1, there are corresponding walls W3, W4, etc. distributed evenly on the whole conveyor belt 3. This means that segment 7 is delimited by walls W2 and W3, and so on. As the conveyor belt moves towards the right the discharge of the product occurs as long as a part of a given segment 4, 5, 6, 7, 8 is present below the discharge device units. The discharge briefly stops while a wall passes below the discharge units along with the movement of the conveyor belt 3, and is resumed for the next segment Simultaneously the product is conveyed towards the end of the conveyor belt 3, which is shown as the edge E, along which a row of bags B4, B5, B6, B7, B8 are moved to the left, as shown by the arrow, by means of an endless chain C-C and synchronously with the segments between the walls W1, W2, W3, W4. As may be seen in Fig. 1 the parallel segments 4-8 are obliquely directed with respect to the conveyor edge E. Thereby a packing device is obtained, by which the content of the segment 4 (and the other segments 5,6,7 in their turn) is gradually emptied into the bags B4, B5, B6, B7, B8, which are shown schematically. For instance, the amount of product that is shown while being delivered to the segment 8 will be collected by the bag B8.

In Fig. 1 the bags B4-B7 have varying degrees of fullness; the bag B4 is almost filled with its portion that has come from segment 4. The bags are conveyed away by means which are not shown, while being closed and/or sealed and liberated from the chain C-C. Correspondingly it is also not shown how the bags arrive to the beginning of the chain. In describing the present embodiment bags have been used as an example of packs, but the function of the transfer station will be precisely the same if trays are used, being conveyed synchronously on a separate conveyor belt at the end of and perpendicular to the conveyor belt structure.

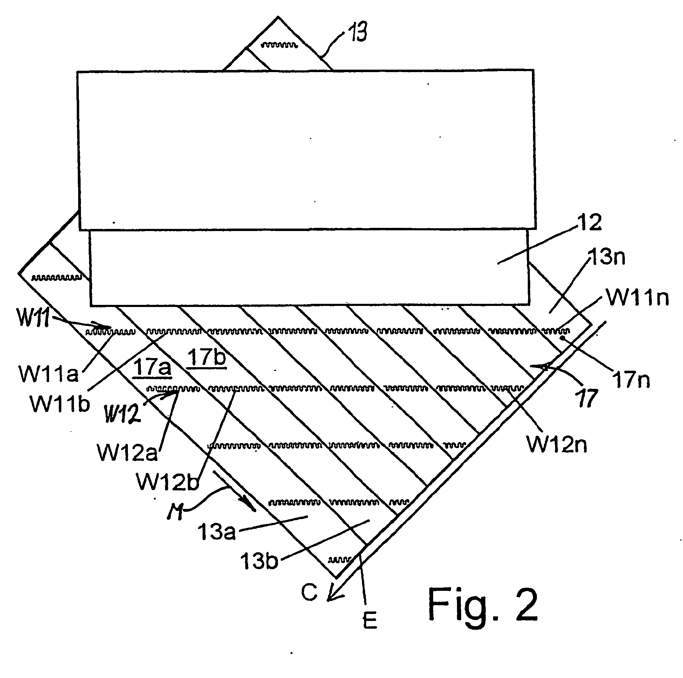

In Fig. 2 is seen a conveyor belt structure 13 that at first looks similar to the conveyor belt structure 3 in Fig. 1. The outline of the discharge units 12 in a discharge device is shown. However, the conveyor belt structure 13 is split into a number (n) parallel conveyor belts 13a, 13b,....., 13n. All these conveyor belts are moved synchronously, so that e.g. the segment 17 is composed as en end-to-end disposition of shorter oblique part segments 17a, 17b, ....., 17n, that are each created between shorter walls W11a, W11b, W12a, W12b, ....., W11n, W12n. At the edge E the delivery of the products occurs in precisely the same manner as explained with respect to Fig. 1, i.e. the packs are transported along the end or "edge" E in the direction C synchronously with the gradual emptying of a particular segment. In the embodiment shown the conveyor belts have been shown having equal length, which simplifies the stocking of spare belts, but dependent on the space available they may have different lengths, dependent of the placement below the discharge units 12.

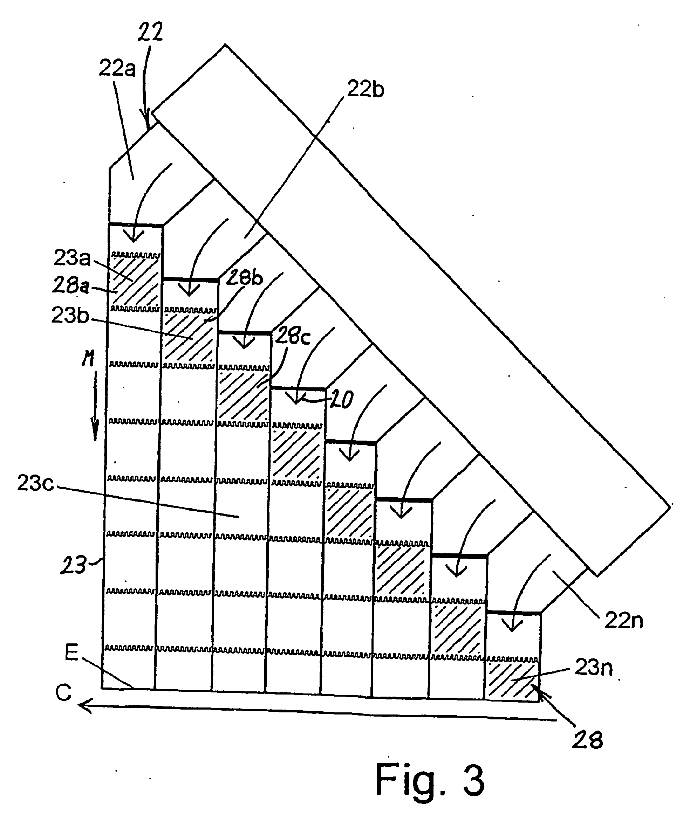

In Fig. 3 is shown an embodiment of the invention, in which the distribution of the product on the conveyor belt system along a transport segment 28 is oblique with respect to the direction of transport M by means of a corresponding oblique placement of the discharge units 22a, 22b, ....., 22n of the weighing, respecively discharge system 22, in order that the delivery to the packs occurs in correct time and place perpendicular to the conveyor belt structure 23 at its end or edge E. The parallel conveyor belts 23a, 23b, 23c,....., 23n themselves have walls that are perpendicular to the direction of travel M and hence parallel to the edge or end E of the conveyor belt structure 23. The part segments 28a, 28b, ... between walls on the conveyor belts 23a, 23b, ... that each carries a part of the total weighed portion will be shifted stepwise with respect to the neighbouring conveyor belt, so that a "logical" or "virtual" segment 28 is built of part segments 28a, 28b, ... shown hatched in Fig. 3. It is seen in Fig. 3 that this segment 28 and corresponding segments that are parallel to it proceed obliquely to the edge E of the conveyor. By the sequential emptying of each conveyor 23a, 23b, ... the combined weight of the product is delivered part-portionwise to a particular pack during its passage from right to left (shown by the arrow C) in the figure. It may be seen in Fig. 3 that the walls of the segments are made to be essentially perpendicular to the opening/discharge direction 20 of the discharge units 22a, 22b, ....

In the embodiment shown the conveyor belts 23a, 23b, ... have different lengths, but dependent on the space available they may be of equal lenght, which simplifies the stocking of belts. Also, it must be brought into consideration that a shorter conveyor belt will see more wear, because it is used many more times to carry a given part portion than a longer belt

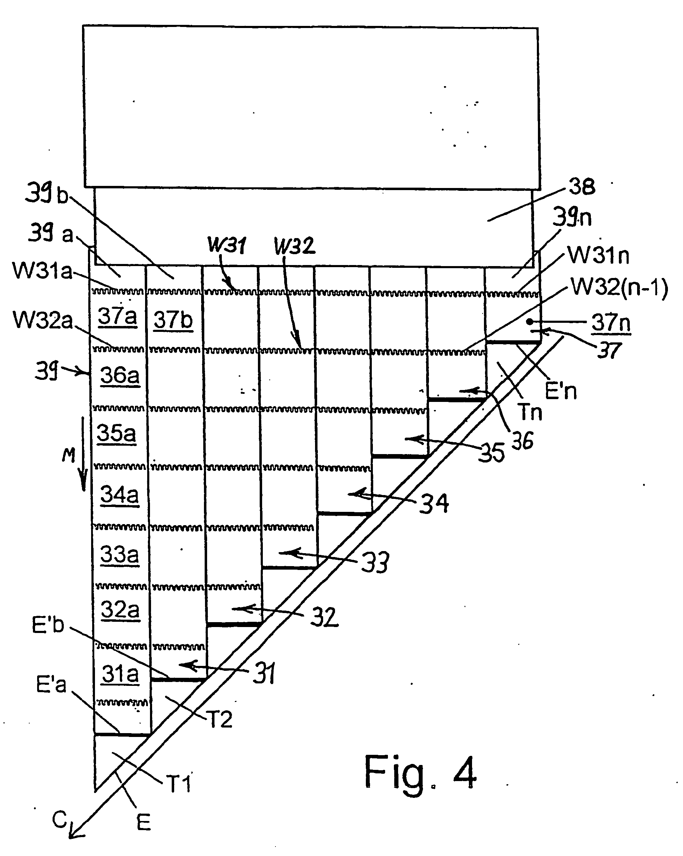

In Fig. 4 is shown a conveyor belt structure that is similar to the structure in Fig. 2, but in this case n parallel conveyor belts 39a, 39b, ....., 39n are moved perpendicular to the discharge units 38, the outline of which is shown, i.e. moved perpendicular to the longitudinal extent of the discharge device. Walls W31a, W31b ....., W31n; W32a, W32b, ....., W32n, and similar walls constitute by synchronous motion of the conveyor belts end-to-end walls W31, W32 and corresponding further walls, that in the present case are perpendicular to direction of movement M of the conveyor belts. The conveyor belts arrive respectively to an edge E'a, E'b, ... E'n, where each has a triangular transfer element T1, T2, T, ..., Tn that permits a product that arrives to the edge to slide to the bags to be filled, that are moved along the combined edge E in the direction shown by the arrow C. In the embodiment shown the conveyor belts have different lengths, but dependent on the space available they may be of equal lenght, which simplifies the stocking of belts. Segments 31-37 that are perpendicular to conveyor belts 39a, 39b, ..., respectively perpendicular to the direction of transport M are created by synchronously moved part segments 31a, 31b, ...; 32a, 32b, ...; 33a, 33b, ...; 34a, 34b, ...; 35a, 35b, ...; 36a, 36b, ...;37a, 37b, ...that are separated by the walls.

In all the embodiments, there are rollers and drive means provided for the endless conveyor belts as well as means for controlling the relative speeds of the various conveyor belts and chains, these have however not been shown and their construction is considered to fall within the normal tasks of the skilled person. Such means comprise apparatus for synchronising the movements of the conveyor belt structure (3, 13, 23, 39) and the pack transport means (C-C), based on any one of position, velocity, and acceleration inputs or a combination of inputs from the moving parts as well as on the operating status of a weighing, sorting, or similar apparatus (2, 12, 22, 38).

The walls on the conveyor belts for defining the segments may be manufactured by any suitable process. Walls perpendicular to the longitudinal direction of the belts, where applicable, do not need the same flexibility as walls with a different angle to the longitudinal direction, because they will not be subjected to stretching when passing around rollers.

In the description synchronous movements between the conveyor belt structure and the conveying mechanism for the packs have been described. These movements are performed with minimum acceleration if they are continuous. However, there is nothing that prevents that they may be performed with shorter or longer periods of deviating velocities, even complete standstill, however at all times synchronously, in order to adapt to the requirements of special products handled by the transfer station.

The fundamental transport principle of the invention is not dependent on the presence of the above-mentioned walls, because they may not be required if the goods does not have a propensity to roll from one segment into a neighbouring segment When products are combined by weighing in order to obtain a given portion, use is made of scales with several discharge units, and the portion may be placed along a length of conveyor belt A pack at the end of the conveyor belt is not filled until the whole portion has been conveyed. According to the invention this may be performed faster, in that the portion is distributed partly across the width of the conveyor belt, and the receiving open packs are dynamically conveyed synchronously along the end of the conveyor belt during the whole arrival time of a portion.

The foregoing description of the specific embodiments will so fully reveal the general nature of the present invention that others skilled in the art can, by applying current knowledge, readily modify or adapt for various applications such specific embodiments without undue experimentation and without departing from the generic concept, and therefore, such adaptations and modifications should and are intended to be comprehended within the meaning and range of equivalents of the disclosed embodiments. It is to be understood that the phraseology or terminology employed herein is for the purpose of description and not of limitation. The means, materials, and steps for carrying out various disclosed functions may take a variety of forms without departing from the invention.

Thus, the expressions "means to... " and "means for ...", or any method step language, as may be found in the specification above and/or in the claims below, followed by a functional statement, are intended to define and cover whatever structural, physical, chemical, or electrical element or structure, or whatever method step, which may now or in the future exist which carries out the recited functions, whether or not precisely equivalent to the embodiment or embodiments disclosed in the specification above, i.e., other means or steps for carrying out the same function can be used; and it is intended that such expressions be given their broadest interpretation.

## Claims

1. A transfer station for packing of products combined to portions, comprising a conveyor belt structure (3, 13, 23, 39) with an edge (E) defined as one end of the conveyor, said conveyor belt structure (3, 13, 23, 39) displaying oblong segments (4-8; 17; 28; 31-37), in which the products are combined to portions, in order to pack the content of each segment (4-8; 17; 28; 31-37) into packs (B4-B8) at said edge by means of a packing device (C-C, B4-B8),
**characterised in that** the segments (4-8; 17; 28; 31-37) have an oblique relationship to said edge (E) of the conveyor belt structure, and that the transfer station for use with conveyor means (C-C) for transporting packs (B4-B8) along said edge (E) is constituted such that the content in each segment (4-8; 17; 28; 31-37) is dynamically emptied into a predetermined pack (B4-B8) during the time in which the pack (B4-B8) is moved by said conveyor means (C-C) along said edge, synchronously with the consecutive arrival of the parts of the segment (4-8; 17; 28; 31-37) to said edge (E).

2. A transfer station according to claim 1, **characterised in that** the transfer station comprises a discharge device (2, 12, 22, 38) that delivers the products onto a collection segment (8, 28, 37) that passes the discharge device (2, 12, 22, 38).

3. A transfer station according to claim 2, **characterised in that** the discharge device (2,12,22,38) is provided with discharge outlets that are disposed in a sequence along the length of the collection segment (8, 28, 37).

4. A transfer station according to claim 3, **characterised in that** the discharge outlets are disposed in a straight row.

5. A transfer station according to claim 3, **characterised in that** the discharge outlets are disposed on a curve, in particular along a section of a circle.

6. A transfer station according to any of the claims 2 through 5,
**characterised in that** the conveyor belt structure (23) is divided into sections (28) by means of walls, and **in that** the discharge device (22) is provided with discharge outlets, the direction of which is perpendicular to the walls.

7. A transfer station according to any of the claims 2 through 6,
**characterised in that** the conveyor belt structure (3, 13, 23, 39) comprises walls that define sections (4-8, 28, 37) and **in that** the transfer station is arranged in such a manner with respect to the discharge device (2,12,22,38) that each transport segment (4-8, 28, 37) is filled with the products delivered from the discharge device (2,12,22,38) during the time that is available between the passages of consecutive walls of the corresponding segment (4-8, 28, 37).

8. A transfer station according to any of the claims 2 through 7,
**characterised in that** the discharge device (2) is constituted as a weighing apparatus (1) with discharge units (12, 22, 38), in which the weighing apparatus (1) is adapted to let a number of products with a combined target weight be delivered in corresponding segments (4-8, 28,37), the contents of which being subsequently emptied by means of the conveyor belt structure (3, 13, 23, 39) into corresponding packs (B4-B8) that are transported synchronously to the conveyor belt structure (3, 13, 23, 39) along the edge (E) of the conveyor.

9. A transfer station according to any of the claims 2 through 8,
**characterised in that** the conveyor belt structure (3, 13, 23, 39) is subdivided into segments (4-8, 17,21,31-37) by means of walls (W1-W4; W11, W12; W31, W32).

10. A transfer station according to any of the claims 1 through 9,
**characterised in that** the conveyor belt structure (13, 23, 39) is comprised of a number of parallel conveyor belts (13a, 13b, ...; 23a, 23b, ...; 39a, 39b, ...) and that the segments (17,28,31-37) are respectively constituted by a row of part segments (17a, 17b, ...; 28a, 28b, ...; 37a, 37b, ...) on the individual conveyor beits (13a,13b, ...; 23a, 23b, ...; 39a, 39b, ...).

11. A transfer station according to claim 10, **characterised in that** the collection segments (4-8, 28, 37) are formed by part walls (W11a, b, ...; W12a, b, ...; W31a, b, ...; W32a, b, ...) on the individual conveyor belts (13a, 13b, ...; 23a, 23b, ...; 39a, 39b, ...) whereby the part walls create end-to-end walls during a synchronous movement

12. A transfer station according to any of the claims 1 through 11,
**characterised in that** walls (W31, W32) that define collection segments (28; 31-37) are perpendicular to the transport direction (M) of the conveyor belt structure (23, 39).

13. A transfer station according to any of the claims 1 through 12,
**characterised in that** the conveyor belt edge (E) of the conveyor belt structure (3, 13) is perpendicular to the transport direction (M) of the conveyor belt structure (3, 13) and that the segments (4-8; 17; 28) are obliquely disposed with respect to the transport direction (M) of the conveyor belt structure (3,13) (Fig. 1-3).

14. A transfer station according to claim 13, **characterised in that** the segments (4-8;17) are defined by walls (W1-W4; W11; W12) that are obliquely directed with respect to the transport direction (M) of the conveyor belt structure (3, 13) (Fig. 1,2).

15. A transfer station according to claim 13, **characterised in that** the segments (28) display part walls that are disposed on on individual conveyor belts (23a, 23b, ...) of the conveyor belt structure (23) perpendicular to the transport direction (M) of the conveyor belt structure (23), whereby they form a stepwise wall from conveyor belt to conveyor belt by synchronous operation of the conveyor belts (23a, 23b, ...) (Fig. 3).

16. A transfer station according to any of the claims 1 through 12,
**characterised in that** the conveyor edge (E) is disposed obliquely to the transport direction (M) of the conveyor belt structure (39) and that the segments (31-37) are disposed perpendicular to the transport direction (M) of the conveyor belt structure (39) (Fig. 4).

17. A transfer station according to claim 16, **characterised in that** the conveyor belt structure (39) is formed by individual conveyor belts (39a, 39b, ...) that end at the conveyor edge (E) with their ends (E'a, E'b, ...) in a stepwise arrangement of transfer elements (T1 through Tn) that define the edge (E) (Fig. 4).

18. A transfer station according to any of the claims 1 through 15,
**characterised in that** the conveyor belt structure (3) is provided in the form of a single wide conveyor belt.

19. A transfer station according to any of the claims 1 through 18,
**characterised in that** it comprises a packing device (C-C, B4-B8) with transport means in the form of a suitable transport chain (C-C) that moves the packs (B4-B8) along the conveyor edge (E) synchronously with the conveyor belt structure (3, 13, 23, 39).

20. A transfer station according to any of the claims 1 through 19,
**characterised in that** it comprises means for synchronising the movements of the conveyor belt structure (3, 13, 23, 39) and the pack transport means (C-C), based on any one of position, velocity, and acceleration inputs or a combination of inputs from the moving parts as well as on the operating status of a weighing, sorting, or similar apparatus (2, 12, 22, 38).

21. Use of a transfer station according to any of the claims 1 through 20,
**characterized in that** a pack (B4, B5, B6, B7, B8) is brought forward on a chain (C-C) and opened at the edge (E) of the conveyor belt structure (3, 13, 23, 39) where the first arriving part of the desired combined collection of products arrives, whereupon it is moved linearly synchronously with the arrival of products, until the content of a segment between two walls has been delivered, whereupon the pack is closed and conveyed onwards for further processing.

## Patentansprüche

1. Übergabeeinrichtung zum Abpacken von in Portionen zusammengestellten Produkten, umfassend eine Förderbandanordnung (3, 13, 23, 39) mit durch einen Rand (E) gebildetem Förderende, wobei die Förderbandanordnung (3, 13, 23, 39) längliche Abschnitte (4-8; 17; 28; 31-37) aufweist, in denen die Produkte in Portionen zusammengebracht werden, um den Portionsinhalt eines jeden Abschnitts (4-8, 17, 28, 31-37) am Förderende in einer Verpackung (B4-B8) mittels einer Packeinrichtung (C-C, B4-B8) zu verpacken, **dadurch gekennzeichnet, dass** die Förderabschnitte (4-8; 17; 28; 31-37) gegenüber dem Förderendrand (E) schräg verlaufen und dass die Übergabeeinrichtung zum Betrieb mit einem Fördermittel (C-C) zum Fördern von Verpackungen (B4-B8) entlang dem Förderendrand (E) derart eingerichtet ist, dass der Produktinhalt in jedem Abschnitt (4-8; 17; 28; 31-37) in eine zugeordnete Verpackung (B4-B8) während der Zeit geleert wird, in der die Verpackung (B4-B8) mittels des Fördermittels (C-C) entlang dem Förderendrand (E) synchron mit laufend an dem Förderendrand (E) eintreffenden Teilen des Abschnitts (4-8; 17; 28; 31-37) bewegt wird.

2. Übergabeeinrichtung nach Anspruch 1, **dadurch gekennzeichnet, dass** die Übergabeeinrichtung eine Austragseinrichtung (2, 12, 22, 38) aufweist, die Produkte in einen die Austragseinrichtung (2, 12, 22, 38) passierenden Sammelabschnitt (8, 28, 37) austrägt.

3. Übertragungseinrichtung nach Anspruch 2, **dadurch gekennzeichnet, dass** die Austragseinrichtung (2, 12, 22, 38) Austragsöffnungen aufweist, die in einer Reihe entsprechend der Länge des Sammelabschnitts (8, 28, 37) angeordnet sind.

4. Übergabeeinrichtung nach Anspruch 3, **dadurch gekennzeichnet, dass** die Austragsöffnungen in gerader Reihe angeordnet sind.

5. Übergabeeinrichtung nach Anspruch 3, **dadurch gekennzeichnet, dass** die Öffnungen der Austragseinrichtung auf gekrümmter Kurve, insbesondere längs eines Kreisabschnitts angeordnet sind.

6. Übergabeeinrichtung nach einem der Ansprüche 2 bis 5, **dadurch gekennzeichnet, dass** die Förderbandanordnung (23) durch Wände in Abschnitte (28) unterteilt ist und dass die Austragseinrichtung (22) Öffnungen mit Austragsrichtungen aufweist, die rechtwinklig zu den Wänden sind.

7. Übergabeeinrichtung nach einem der Ansprüche 2 bis 6, **dadurch gekennzeichnet, dass** die Förderbandanordnung (3, 13, 23, 39) die Abschnitte (4-8, 28, 37) bildende Wände aufweist und dass die Übergabeeinrichtung in Verbindung mit der Austragseinrichtung (2, 12, 22, 38) so angeordnet und ausgebildet ist, dass jeder Förderabschnitt (4-8, 28, 37) mit von der Austragseinrichtung (2, 12, 22, 38) abgegebenen Produkte in der Zeit gefüllt wird, die zwischen dem Durchgang von aufeinanderfolgenden Wänden des zugehörigen Abschnitts (4-8, 28, 37) zur Verfügung steht.

8. Übergabeeinrichtung nach einem der Ansprüche 2 bis 7, **dadurch gekennzeichnet, dass** die Austragseinrichtung (2) durch eine Wägeeinrichtung (1) mit Austragseinheiten (12, 22, 38) gebildet ist, wobei die Wägeeinrichtung (1) so eingerichtet ist, dass sie durch die Austragseinheiten (12, 22, 38) jeweils eine Anzahl von Produkten mit einem vereinigten Sollgewicht in den zugehörigen Abschnitt (4-8, 28, 37) abgibt, um anschließend seinen Produktinhalt des mittels der Förderbandanordnung (3, 13, 23, 39) in die zugeordnete, am Förderendrand (E) synchron mit der Förderbandanordnung (3, 13, 23, 39) bewegte Verpackung (B4-B8) zu entleeren.

9. Übergabeeinrichtung nach einem der Ansprüche 2 bis 8, **dadurch gekennzeichnet, dass** die Förderbandanordnung (3, 13, 23, 39) durch Wände (W1-W4; W11, W12; W31, W32) in die Abschnitte (4-8, 17, 28, 31-37) unterteilt ist.

10. Übergabeeinrichtung nach einem der Ansprüche 1 bis 9, **dadurch gekennzeichnet, dass** die Förderbandanordnung (13, 23, 39) durch eine Anzahl paralleler Förderbänder (13a, 13b, ...; 23a, 23b, ...; 39a, 39b, ...) gebildet ist und dass die Abschnitte (17; 28; 31-37) jeweils durch eine Reihe von Teilabschnitten (17a, 17b, ...; 28a, 28b, ...; 37a, 37b, ...) an den individuellen Förderbändern (13a, 13b, ...; 23a, 23b, ...; 39a, 39b, ...) gebildet sind.

11. Übergabeeinrichtung nach Anspruch 10, **dadurch gekennzeichnet, dass** die Sammelabschnitte (4-8, 28, 37) durch Teilwände (W11a, b, ...; W12a, b, ...; W31a, b, ...; W32a, b, ...) an den einzelnen Förderbändern (13a, 13b, ...; 23a, 23b, ...; 39a, 39b, ...) gebildet sind, wobei die Teilwände bei synchronem Betrieb der Förderbänder durchgehende Wände bilden.

12. Übergabeeinrichtung nach einem der Ansprüche 1 bis 11, **dadurch gekennzeichnet, dass** Wände (W31, W32), die Sammelabscbnitte (28; 31-37) bilden, senkrecht zur Förderrichtung (M) der Förderbandanordnung (23, 39) angeordnet sind.

13. Übergabeeinrichtung nach einem der Ansprüche 1 bis 12, **dadurch gekennzeichnet, dass** der Förderendrand (E) der Förderbandanordnung (3, 13) senkrecht zur Förderrichtung (M) der Förderbandanordnung (3, 13) verläuft und dass sich die Abschnitte (4-8; 17; 28) schräg zur Förderrichtung (M) der Förderbandanordnung (3, 13) erstrecken (Fig. 1-3).

14. Übergabeeinrichtung nach Anspruch 13, **dadurch gekennzeichnet, dass** die Abschnitte (4-8; 17) durch Wände (W1-W4; W11, W12) gebildet sind, die zur Förderrichtung (M) der Förderbandanordnung (3, 13) schräg gerichtet sind (Fig. 1, 2).

15. Übergabeeinrichtung nach Anspruch 13, **dadurch gekennzeichnet, dass** die Abschnitte (28) Teilwände aufweisen, die an einzelnen Förderbändern (23a, 23b,...) der Förderbandanordnung (23) ausgebildet und zur Förderrichtung (M) der Förderbandanordnung (23) senkrecht gerichtet sind, wobei sie bei synchronem Betrieb der Förderbänder (23a, 23b, ...) eine von Förderband zu Förderband in Stufen gebildete Wand bilden (Fig.3).

16. Übergabestation nach einem der Ansprüche 1 bis 12, **dadurch gekennzeichnet, dass** der Förderendrand (E) zur Förderrichtung (M) der Förderbandanordnung (39) schräg verläuft und sich die Abschnitte (31-37) senkrecht zur Förderrichtung (M) der Förderbandanordnung (39) erstrecken (Fig. 4).

17. Übergabeeinrichtung nach Anspruch 16, **dadurch gekennzeichnet, dass** die Förderbandanordnung (39) durch einzelne Förderbänder (39a, 39b, ...) gebildet ist, die am Förderendrand (E) mit ihren Enden (E'a, E'b, ...) in einer Stufenanordnung von den Rand (E) bestimmenden Übergabeelementen (T1 bis Tn) enden (Fig. 4).

18. Übergabeeinrichtung nach einem der Ansprüche 1 bis 15, **dadurch gekennzeichnet, dass** die Förderbandanordnung (3) die Form eines einzigen breiten Förderbandes aufweist.

19. Übergabeeinrichtung nach einem der Ansprüche 1 bis 18, **dadurch gekennzeichnet, dass** sie eine Packeinrichtung (C-C, B4-B8) mit einem zweckmäßig durch eine Förderkette (C-C) gebildeten Fördermittel aufweist, das die Verpackungen (B4-B8) synchron mit der Förderbandanordnung (3, 13, 23, 39) entlang dem Förderendrand (E) fortbewegt.

20. Übergabeeinrichtung nach einem der Ansprüche 1 bis 19, **dadurch gekennzeichnet, dass** sie Mittel zum Synchronisieren der Bewegungen des Förderbandes (3, 13, 23, 39) und der Verpackungstransportmittel (CC) umfasst, basierend auf einem jeweiligen von Position, Geschwindigkeit und Beschleunigung erworbenen Eingabe oder einer Kombination von Eingaben von den beweglichen Teilen sowie über den Betriebszustand einer Waage, Sortieranlage oder einer ähnlichen Vorrichtung (2, 12, 22, 38).

21. Verwendung einer Übergabeeinrichtung nach einem der Ansprüche 1 bis 20, **dadurch gekennzeichnet, dass** eine Verpackung (B4, B5, B6, B7, B8) an einer Kette (CC) fortschreitet und an der Förderendrand (E) des Förderbandanordnung (3, 13, 23, 39), wo die erste ankommende Teil der gewünschten kombinierten Sammlung von Produkten ankommt, geöffnet wird, worauf sie linear synchron mit der Ankunft von Produkten bewegt wird, bis der Inhalt eines Segments zwischen zwei Wänden geliefert worden ist, wobei die Packung geschlossen und weiterbefördert zur weiteren Verarbeitung wird.

## Revendications

1. Poste de transfert pour l'emballage de produits combinés en portions, comprenant une structure de transporteur à courroi (3, 13, 23, 39) avec un bord (E) étant défini comme une extrémité du transporteur, ladite structure de transporteur à courroi (3, 13, 23, 39) présentant des segments allongés (4-8, 17,28, 31-37), dans lesquelles les produits sont combinés à des portions, afin d'emballer le contenu de chaque segment (8.4, 17,28,31 à 37) en paquets (B4-B8) au niveau dudit bord au moyen d'un dispositif d'emballage (C-C, B4-B8), **caractérisé en ce que** les segments (4-8, 17, 28, 31 à 37) ont une relation oblique par rapport audit bord (E) de la structure du transporteur à courroi, et que la Poste de transfert pour une utilisation avec des moyens de transport (C-C) pour transporter des emballages (B4-B8) le long dudit bord (E) est constitué de telle sorte que le contenu de chaque segment (4-8; 17 , 28, 31-37) est vidé de manière dynamique dans un paquet prédéterminé (B4-B8) pendant le temps où le paquet (B4-B8) est déplacé par lesdits moyens de transport (C-C) le long dudit bord, en synchronisme avec l'arrivée consécutive de les parties de segment (4-8, 17, 28, 31-37) audit bord (E).

2. Poste de transfert selon la revendication 1, **caractérisé en ce que** le Poste de transfert comprend un dispositif de décharge (2, 12, 22, 38) qui décharge des produits sur un segment de recouvrement (8, 28, 37) qui passe le dispositif de décharge (2, 12, 22, 38).

3. Poste de transfert selon la revendication 2, **caractérisé en ce que** le dispositif d'évacuation (2, 12,22,38) est pourvue des sorties de décharge qui sont disposés dans une séquence le long de la longueur du segment de recouvrement (8,28,37).

4. Poste de transfert selon la revendication 3, **caractérisé en ce que** les sorties de décharge sont disposés en une rangée rectiligne.

5. Poste de transfert selon la revendication 3, **caractérisé en ce que** les sorties de décharge sont disposées sur une courbe, en particulier le long d'une section d'un cercle.

6. Poste de transfert selon l'une quelconque des revendications 2 à 5, **caractérisé en ce que** la structure du transporteur à courroi (23) est divisé en sections (28) au moyen de parois, et **en ce que** le dispositif d'évacuation (22) est pourvue des sorties de décharge, dont la direction est perpendiculaire aux parois.

7. Poste de transfert selon l'une quelconque des revendications 2 à 6, **caractérisé en ce que** la structure du transporteur à courroi (3, 13, 23, 39) comprend des parois qui définissent des sections (4-8, 28, 37) et **en ce que** le Poste de transfert est agencé de telle sorte par rapport au dispositif de décharge (2, 12, 22, 38) que chaque segment de transport (4-8,28,37) est remplie avec les produits délivrés du dispositif de décharge (2, 12, 22, 38) pendant le temps qui est disponible entre les passages de parois consécutives du segment correspondant (4-8, 28, 37).

8. Poste de transfert selon l'une quelconque des revendications 2 à 7, **caractérisé en ce que** le dispositif de décharge (2) est constitué comme un appareil de pesage (1) avec des unités de décharge (12, 22, 38), dans lequel l'appareil de pesage (1) est adapté pour permettre à un certain nombre de produits avec un poids cible combinée d'être délivré en segments correspondants (4-8, 28, 37), dont le contenu est ensuite vidé par l'intermédiaire de la structure du transporteur à courroi (3, 13,23,39) dans des emballages correspondants (B4-B8) qui sont transportés de façon synchrone à la structure du transporteur à courroi (3, 13, 23, 39) le long du bord (E) du transporteur.

9. Poste de transfert selon l'une quelconque des revendications 2 à 8, **caractérisé en ce que** la structure du transporteur à courroi (3, 13, 23, 39) est subdivisé en segments (4-8, 17, 21, 31-37) au moyen de parois (W1-W4; W11, W12, W31, W32).

10. Poste de transfert selon l'une quelconque des revendications 1 à 9, **caractérisé en ce que** la structure du transporteur à courroi (13, 23, 39) est constitué d'un certain nombre de transporteurs à courroi parallèles (13a, 13b, ...; 23a, 23b, ...; 39a, 39b, ...) et que les segments (17, 28, 31-37) sont respectivement constitués par une rangée de segments partiels (17a, 17b, ..., 28a, 28b, ...; 37a, 37b, ...) sur les bandes transporteuses individuelles (13a, 13b, ...; 23a, 23b, ...; 39a, 39b, ...).

11. Poste de transfert selon la revendication 10, caractérisé sen ce que les segments de recouvrement (4-8, 28, 37) sont formés par des parois de la pièce (W11 a, b, ... ; W12a, b, ..., W31A, b, ...; W32a, b, ...) sur les transporteurs à courroi individuelles (13a, 13b, ...; 23a, 23b, ...; 39a, 39b, ...) de sorte que les parois de la pièce créent des parois de bout en bout lors d'un mouvement synchrone.

12. Poste de transfert selon l'une quelconque des revendications 1 à 11, caracténsé en ce que des parois (W31, W32) qui définissent des segments de recouvrement (28; 31 à 37) sont perpendiculaires à la direction de transport (M) de la structure du transporteur à courroi (23, 39).

13. Poste de transfert selon l'une quelconque des revendications 1 à 12, **caractérisé en ce que** le bord du transporteur à courroi (E) de la structure du transporteur à courroi (3, 13) est perpendiculaire à la direction de transport (M) de la structure du transporteur à courroi (3, 13) et que les segments (4-8, 17,28) sont disposées obliquement par rapport à la direction de transport (M) de la structure du transporteur à courroi (3, 13) (fig. 1 à 3).

14. Poste de transfert selon la revendication 13, **caractérisé en ce que** les segments (4-8, 17) sont définies par des parois (W1-W4; W11, W12) qui sont dirigées obliquement par rapport à la direction de transport (M) du transporteur à courroi (3, 13) (Fig. 1, 2).

15. Poste de transfert selon la revendication 13, **caractérisé en ce que** les segments (28) montrent des parois qui sont disposées sur des transporteurs à courroi individuelles (23a, 23b, ...) de la structure du transporteur à courroi (23) perpendiculaire à la direction de transport (M) de la structure du transporteur à courroi (23), de sorte qu'ils forment une paroi par étapes du transporteur à transporteur par le synchronisme des transporteurs à courroi (23a, 23b, ...) (Fig. 3).

16. Poste de transfert selon l'une quelconque des revendications 1 à 12, **caractérisé en ce que** le bord du transporteur à courroi (E) est disposé obliquement par rapport à la direction de transport (M) de la structure du transporteur à courroi (39) et que les segments (31-37) sont disposé perpendiculairement à la direction de transport (M) de la structure du transporteur à courroi (39) (Fig.4).

17. Poste de transfert selon la revendication 16, **caractérisé en ce que** la structure du transporteur à courroi (39) est formé par des transporteurs à courroi individuelles (39a, 39b, ...) qui se terminent au niveau du bord du transporteur à courroi (E) avec leurs extrémités (E'a, E'b, ...) dans une disposition pas à pas des éléments de transfert (Tl à Tn) qui définissent le bord (E) (Fig. 4).

18. Poste de transfert selon l'une quelconque des revendications 1 à 15, **caractérisé en ce que** la structure du transporteur à courroi (3) est prévue sous la forme d'un seul transporteur à courroi large.

19. Poste de transfert selon l'une quelconque des revendications 1 à 18, **caractérisé en ce qu'**il comprend un dispositif d'emballage (C-C, B4-B8), avec des moyens de transport sous la forme d'une chaîne de transport adapté (C-C) qui déplace les paquets (B4-B8) le long du bord de convoyeur (E) en synchronisme avec la structure du transporteur à courroi (3, 13, 23, 39).

20. Poste de transfert selon l'une quelconque des revendications 1 à 19, **caractérisé en ce qu'**il comprend des moyens pour synchroniser les mouvements de la structure de la bande transporteuse (3, 13, 23, 39) et les moyens de transport de paquets (C-C), sur la base de l'une quelconque de position, de vitesse et d'accélération entrées ou d'une combinaison d'entrées en provenance des pièces en mouvement, ainsi que sur l'état de fonctionnement d'un appareil de pesage, de triage, ou similaire (2, 12, 22, 38).

21. Utilisation d'une Poste de transfert selon l'une quelconque des revendications 1 à 20, **caractérisé en ce qu'**un paquet (B4, B5, B6, B7, B8) est anamée vers l'avant sur une chaîne (C-C) et ouvert au niveau du bord (E) du transporteur à courroi (3, 13, 23, 39) lorsque la première partie à destination de l'ensemble combiné désiré de produits arrive, après quoi il est déplacé linéairement de façon synchrone avec l'arrivée des produits, jusqu'à ce que le contenu d'un segment entre deux parois a été livré, après quoi le paquet est fermé et transporté par la suite pour un traitement ultérieur.
